# EUROPEAN PATENT SPECIFICATION

(11) **EP 3 159 119 B1**
(45) Date of publication and mention of the grant of the patent: **18.11.2020**
(21) Application number: 15809828.5
(22) Date of filing: 19.06.2015
(51) Int. Cl.: B25J 13/06, B25J 9/22, G06F 3/01, B25J 13/08, B25J 19/02, B25J 19/06, B25J 9/16, B25J 9/00

(54) **WORKER TERMINAL FOR ROBOT OPERATION**
ARBEITERENDGERÄT FÜR ROBOTERBETRIEB
TERMINAL D'OPÉRATEUR POUR LE FONCTIONNEMENT D'UN ROBOT

(30) Priority: 20.06.2014 JP 2014127668
(43) Date of publication of application: 26.04.2017
(73) Proprietor: Omron Corporation, Kyoto-shi, Kyoto 600-8530 (JP)
(72) Inventor: TAKAICHI, Ryuichiro, Kyoto-shi, Kyoto 600-8530 (JP); KAWASHIMA, Yasushi, Kyoto-shi, Kyoto 600-8530 (JP); ABE, Masayoshi, Kyoto-shi, Kyoto 600-8530 (JP); EDA Takayuki, Kyoto-shi, Kyoto 600-8530 (JP)
(74) Representative: Becker & Kurig Partnerschaft Patentanwälte PartmbB
(86) International application number: PCT/JP2015/067702
(87) International publication number: WO 2015/194659

(56) References cited:
- WO-A1-2010/110411
- JP-A- H06 337 630
- JP-A- 2001 067 179
- JP-A- 2008 192 004
- JP-A- 2012 068 777
- US-A1- 2002 120 362
- US-A1- 2011 264 238
- US-A1- 2013 317 648
- WILLIAMS M R ET AL: "Evaluation of Head Orientation and Neck Muscle EMG Signals as Command Inputs to a Human-Computer Interface for Individuals With High Tetraplegia", IEEE TRANSACTIONS ON NEURAL SYSTEMS AND REHABILITATIONENGINEERING, IEEE SERVICE CENTER, NEW YORK, NY, US, vol. 16, no. 5, 1 October 2008 (2008-10-01), pages 485-496, XP011348134, ISSN: 1534-4320, DOI: 10.1109/TNSRE.2008.2006216
- NAN BU ET AL.: 'A Hybrid Motion Classification Approach for EMG-Based Human-Robot Interfaces Using Bayesian and Neural Networks' IEEE TRANSACTIONS ON ROBOTICS vol. 25, no. 3, pages 502 - 511, XP011332864

## Description

### BACKGROUND OF THE INVENTION

### 1. Field of the Invention

The invention relates to a production mode in which a worker works by using multiple robots.

### 2. Description of Related Art

With diversification of customer needs, in the manufacturing site, it is urgent to deal with multi-item small sized production, short-term production, variable production and so on. In such environment changes, there are more enterprises that change from a linear production mode of configuring workers or robots along a belt conveyor to an artificial-assembly-based small-scale production mode such as cell production mode. The cell production mode refers to that working platforms of various procedures such as machining, assembling, inspection and packing are configured in a manner of surrounding a work space of workers, and one (or several) worker/workers manufactures/manufacture products while moving between the working platforms.

Recently, in order to achieve manpower saving and labor saving in the small-scale production mode, there are examples of importing dual-arm robots that can perform multiple tasks of the same work as the humans in place of the workers. For example, a production mode is proposed in Patent Document 1 that multiple workers and multiple dual-arm robots are configured according to procedures and the workers or dual-arm robots adjacent to each other manufacture products while transferring workpieces.

### [Prior art document]

### [Patent Documents]

Patent Document 1: International Publication No. 2009/071567
Patent Document 2: Japanese Patent Publication Gazette No. 2012-101284

Some background information can be found in the following documents: US 2011/264238 A1, US 2013/317648 A1, US 2002/120362 A1, WILLIAMS ET AL: "Evaluation of Head Orientation and Neck Muscle EMG Signals as Command Inputs to a Human-Computer Interface for Individuals With High Tetraplegia", IEEE TRANSACTIONS ON NEURAL SYSTEMS AND REHABILITATIONENGINEERING; IEEE SERVICE CENTER; NEW YORK; US, vol. 16, no. 5, 1 October 2008, pages 485 - 496, WO 2010/110411 A1 and NAN BU ET AL.: "A Hybrid Motion Classification Approach for EMG-Based Human-Robot Interfaces Using Bayesian and Neural Networks", IEEE TRANSACTIONS ON ROBOTICS, vol. 25, no. 3, pages 502 - 511.

### SUMMARY OF THE INVENTION

### [Problem to be solved in the invention]

However, work in various procedures of the small-scale production mode is varied, and some work requires detailed activities or advanced judgment that can be implemented only by the humans. Therefore, when the work to be performed by the humans is totally switched to the dual-arm robots, high-performance and high-intelligence robots including multiple sensors and special hands are required. Therefore, problems exist such as development and teaching of the robots take time and starting of a production line takes time, and the import cost or maintenance cost is high so that it is not easy to obtain investment interest.

Therefore, the invention studies a production mode in a new form in which the humans are not replaced with robots but the humans and the robots give play to their own advantages to jointly accomplish one work. That is to say, detailed activities or parts requiring adaptable (flexible) judgment are in the charge of the worker, simple operations or operations requiring accuracy are in the charge of the robots, and the workers and the robots cooperatively work in the same work space.

For example, suppose that, in the case of the work of screwing a cable inside a product, it is inappropriate for the robots to carry out an activity of aligning cable positions as screwing objects in a narrow (complicated) space inside the product. On the other hand, it is appropriate for the robots to perform simple operations such as screwing, and if they are performed by the workers, bad possibility such as oblique insertion or mistaken torque may occur. In this case, the workers align and press the cable positions, and in this state, the robots perform screwing.

Improvement of operation efficiency and accuracy can be expected if the humans and the robots are in charge of respective skilled activities. Moreover, they may be robots much simpler than the dual-arm robots, and thus the import cost or maintenance cost can be reduced significantly.

However, Factory Automation (FA) is to implement cooperative work of the humans and the robots, and first priority must be given to "safety" and "feasibility". The reason is as follows: there is no malfunction endangering the workers, and if the intention of the workers is not timely and inerrably communicated and reflected on the robots' operations, defective products may be generated. In addition, from the see-through of operation efficiency, it is further hoped that the workers try to send instructions to the robots simply, instructions can be made without using hands (because there may be things in hands in work under most circumstances) and so on.

In addition, in Patent Document 2, as an example for communicating the humans' intention to a mechanical human-machine interface, the following methods are proposed: measuring a joint angle, acceleration, external load and the like by using a sensor mounted on a human body and identifying humans' intention or body operation; inferring the humans' intention according to a surface muscle potential detected from a skin surface or brain waves; mounting a force sensor on a contact unit between the human and the machine; and inferring the intention according to activities of the human's parts such as speed or frequency of a fingertip activity, an angular velocity of an elbow activity or various accelerations. However, any propose method is not suitably used as an operation interface for sending instructions to cooperative robots in FA.

The invention is accomplished in view of the issue, directed to providing a technology for achieving safe and feasible operations with robots.

### [Means of solving the problem]

To achieve the objective, the invention as defined in claim 1 employs the following composition.

That is to say, a worker terminal of the invention sends an operation commands to robots used in work, wherein the worker terminal includes: a first sensor that detects a muscle potential of a worker; a second sensor that detects a head movement of the worker; a processing unit that determines whether or not operation instructions, defined by a combination of the head movement and change in the muscle potential, have been input by the worker, on the basis of the detection results of the first sensor and the second sensor; and a communications unit that sends an operation command to the robot is a determination has been made that an operation instruction has been input by the worker. A prompt unit that prompts the change in the muscle potential sensed by the first sensor and the head movement sensed by the second sensor to the worker is further included. When the change in the muscle potential satisfies a first condition and the head movement satisfies a second condition, the processing unit judges that the operation instruction has been input, and the prompt unit prompts the first condition and the second condition to the worker. Within a specified limit time after the muscle potential satisfies the first condition, the processing unit judges that the operation instruction has been input when the head movement satisfies the second condition, and when the muscle potential satisfies the first condition, the prompt unit further prompts countdown of a limit time for inputting the head movement.

According to the composition, the worker has to intentionally input two entirely different operations, i.e., "change in muscle potential" and "head movement", and thus the robot's malfunction caused by an accidental activity or misoperation can be ruled out as much as possible. Moreover, as long as they are the muscle potential and the head movement, they can be input as a natural activity flow of the worker, even if the worker holds things with two hands, and thus operation efficiency may not be affected. Here, the worker and the robot are preferably in a relationship of cooperative work. Cooperative work refers to that some of multiple operations required for achieving one work are performed by the worker and the rest are performed by the robot. The operations undertaken by the worker and the operations undertaken by the robot sometimes are performed simultaneously or synchronously, and sometimes are performed successively in time.

Preferably, different from pressing down a button or controlling a pull rod, it is not easy for an interface using the muscle potential or body operation to know whether an input operation has been performed correctly (whether its activity is proper). Therefore, if the muscle potential and the head movement are prompted to the worker as the invention, the worker can self-detect whether the input operation is suitable, which helps to make the input operation feasible, improve the input skill, suppress the incorrect input and so on.

Preferably, the input operation is performed while the prompt is confirmed, which helps to make the input operation feasible, improve the input skill, suppress the incorrect input and so on.

Preferably, the input operation is performed while the prompt is confirmed, which helps to make the input operation feasible, improve the input skill, suppress the incorrect input and so on.

Preferably, a setting change unit is further included, which can change the first condition and/or the second condition by the worker. As the body size or body composition has individual differences, the value of the muscle potential or the movement mode of the body of each worker varies greatly. Therefore, compared with employing the same condition (threshold value or the like) for all the workers, input operations can be performed more safely and feasibly by adjusting conditions according to the workers' body features or activity characteristics.

Preferably, the worker terminal includes a see-through head-mounted display, and the prompt unit is a graphic image displayed on the head-mounted display. Thus, the worker can make confirmation at the prompt unit when his/her sight does not leave the workpiece or the robot. So, input operations can be performed more safely and feasibly.

In addition, the invention may be used as a worker terminal or human-machine interface including at least one part of the composition. Moreover, the invention may also be used as a robot operating method or prompt input method including at least one part of the processing, or a program for causing a computer to perform the method or a computer-readable storage medium that stores the program not temporarily. The composition and the processing can be combined with each other to constitute the invention as long as they are not technically contradictory.

### [Effect of the invention]

According to the invention, a robot can be used and perform operations safely and feasibly.

### BRIEF DESCRIPTION OF THE DRAWINGS

Fig. 1 is a diagram of an example of a cell production line.
Fig. 2 is a three-dimensional diagram that schematically indicates a composition example of a working platform according to a first embodiment.
Fig. 3 is a three-dimensional diagram that schematically indicates a composition example of a head unit of a worker terminal.
Fig. 4 is a three-dimensional diagram that schematically indicates a composition example of an arm unit of a worker terminal.
Fig. 5 is a functional block diagram of a robot control system.
Fig. 6 is a control order of robots according to the first embodiment.
Fig. 7 is a diagram of field of view of a worker in an operation mode.
Fig. 8 is a flowchart of input processing of an operation instruction.
Fig. 9A and Fig. 9B are diagrams of an example of output signals of a muscle potential sensor and a gyro sensor.
Fig. 10 is a diagram of a screen in a set mode.

### DESCRIPTION OF THE EMBODIMENTS

The invention relates to a technology for causing humans to send an operation commands to robots used in work feasibly with required timing, especially suitable for a production mode in a new form in which humans and robots cooperate for one work while giving play to their own advantages. In the following embodiment, an example of a cell production line applied to product assembling, inspection and packing in the invention is described.

### (Cell production line)

The cell production mode refers to that working platforms of various procedures such as machining, assembling, inspection and packing are configured in a manner of surrounding a work space of workers, and one or several workers manufacture products while moving between the working platforms. There are several changes in configuration of the working platforms, but the most common form is configuring the working platforms to be in a U-shaped form.

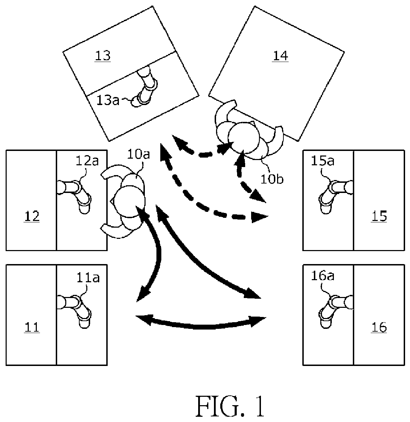

Fig. 1 is a schematic diagram of a cell production line that uses a robot control system according to the present embodiment. Fig. 1 is a top view that observes cells from above. Six working platforms 11-16 are configured to be U-shaped, indicating a condition that five working platforms 11, 12, 13, 15 and 16 except the working platform 14 are provided with robots 11a, 12a, 13a, 15a and 16a that assist workers 10a and 10b in work.

The working platforms 11-16 are places where various operation procedures such as (1) parts assembling, (2) cable bundling, (3) screwing, (4) inspection, (5) packing preparation and (6) packing and moving out are performed respectively. (1) parts assembling, (2) cable bundling and (6) packing and moving out are undertaken by the worker 10a, and (3) screwing, (4) inspection and (5) packing preparation are undertaken by the worker 10b.

### (1) Parts assembling

On the working platform 11, the robot 11a picks up parts from a part rack according to an instruction (signal) of the worker 10a, and transmits parts to the worker 10a (or configures the parts in specified positions). The worker 10a assembles the parts inside the housing of the workpiece, and moves towards the working platform 12 along with the workpiece.

### (2) Cable bundling

On the working platform 12, the robot 12a picks up a bundling band from a stocker according to an instruction (signal) of the worker 10a, and transmits the bundling band to the worker 10a. The worker 10a clusters cables inside the housing of the workpiece and bundles them with a bundling band. Then, the worker 10a hands over the workpiece to the next working platform 13.

### (3) Screwing

On the working platform 13, the worker 10b sends an instruction (signal) to the robot 13a in a state that the workpiece is configured in a specified position and parts as screwing objects are pressed or the cables are fixed. Then, the robot 13a makes an electric driver vertically drop, and performs screwing. When there are multiple screwing positions, the same work is repeated.

### (4) Inspection

On the working platform 14, the worker 10b visually inspects the screwed workpiece. In the example, parts assembling, cable bundling, screw fastening, stain and scratches of the appearance of the workpiece are confirmed, and if there is no problem, the workpiece is configured on a finishing stand between the working platform 14 and the working platform 15.

### (5) Packing preparation

On the working platform 15, after the worker 10b assemblies a packing box and configures it in a specified position, if an instruction (signal) is sent to the robot 15a, the robot 15a picks up the workpiece from the finishing rack, disposes it in the packing box, and places a packing component into the packing box.

### (6) Packing and moving out

On the working platform 16, after the worker 10a bends an upper cover plate of the packing box and fixes it, if an instruction (signal) is sent to the robot 16a, the robot 16a, after clamping the upper cover of the packing box, disposes it on a specified move-out rack.

As described above, two workers 10a and 10b cooperatively work with the required robots while moving between the working platforms, to perform the work of assembling products and packing the products. In addition, the composition of the cell production line, the number of the working platforms or the workers, the work contents, the work in the charge of the workers and the robots and the like described herein are merely one example.

However, when the production mode is implemented, there are several issues to be solved for interaction between the workers and the robots. The first issue is to implement a composition of transferring a worker's instruction (signal) to the robots with required timing (that is, the timing at which the workers complete preparations). The second issue is to implement an operating interface that sends an instruction to the robots according to a natural operation flow (that is, a method in which the worker's activity or time almost has no loss). The compositions are important for the workers and the robots to tacitly cooperate and achieve efficient and accurate production.

In the robot control system of the embodiment, to solve the issues, a composition that the workers use a worker terminal with a wireless communication function and send an operation command (operation trigger) to the robots through wireless communication is employed. Specific compositions of the compositions are described below.

### (Working platform and robot)

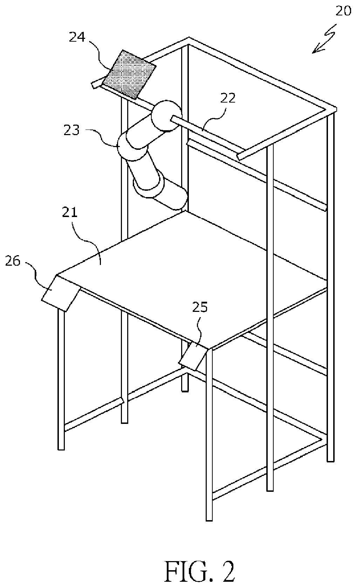

The composition of the working platforms (11, 12, 13, 15 and 16 in Fig. 1) provided with robots is described. Fig. 2 is a three-dimensional diagram that schematically indicates a composition example of a working platform.

The working platform 20 is formed by connecting a metal tube with a joint and assembling a top plate 21 or a required frame plate. A horizontal rail 22 is disposed on an upper unit of the working platform 20, and a robot 23 is mounted to the horizontal rail 22.

The robot 23 of the embodiment does not need an advanced function as the dual-arm robot as long as it can perform simple assisted operations such as transferring objects or screwing as described above. Therefore, a simple and low-cost robot (e.g., a single-arm multi-joint robot) can be used. When cooperative work between the worker and the robot is implemented, preferably, the robot 23 is disposed on an upper unit or a top plate of the working platform 20 or the like according to an operation route of the worker and the requirement of ensuring a work space. Herein, the robot may be lightweight by simplifying the function (effect) and composition of the robot 23. Therefore, it is easy to dispose the robot 23 on the horizontal rail 22 or the top plate (not shown) of the working platform 20.

The robot 23 has an identification color display unit 24. Identification colors (e.g., red, green, blue, dark red, yellow) different from each other for identifying robots are assigned to the five robots (11a, 12a, 13a, 15a, 16a) shown in Fig. 1. The identification color display unit 24 may include, for example, such a color-attached member as a color panel. Moreover, it may also include a luminescent screen including a light emitting diode (LED), a liquid crystal display, an organic electroluminescence (EL) display and other devices capable of lighting-on/lighting-off. Alternatively, all or some of the working platform or robot body may also be formed by members in identification colors. That is to say, the objective (distinguishing the robots) can be achieved as long as the identification colors are strikingly prompted as much as possible in the position within the field of view of the worker.

Moreover, an integrated circuit (IC) tag 25 as a robot identification mark is mounted to the top plate 21 of the working platform 20. A robot identification (ID) assigned to the robot 23 is recorded on the IC tag 25. For the robot ID, like the identification color, different IDs are assigned to respective robots to identify the five robots.

Moreover, the working platform 20 is provided with a human-sensing sensor 26. The human-sensing sensor 26 is a sensor for sensing whether the worker is near the working platform 20 (that is to say, within an available range of the robot 23). For example, an infrared sensor, a scattered reflection sensor or the like can be used.

### (Worker terminal)

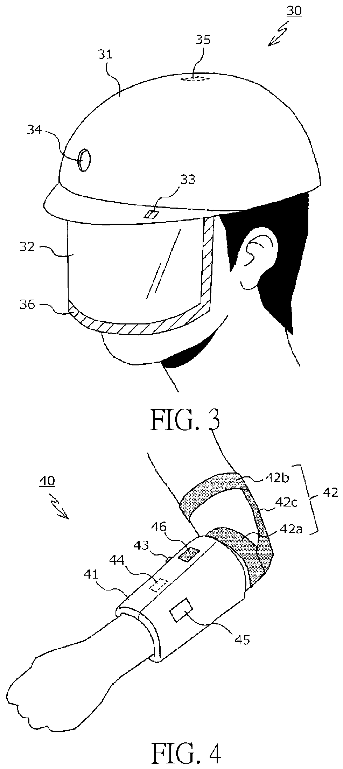

Next, the composition of the worker terminal used by the worker is described. In the embodiment, a wearable worker terminal available for the worker to wear is used. Specifically, the worker terminal includes a head-mounted head unit (Fig. 3) mounted on the head and an arm unit (Fig. 4) mounted to the arm.

### (1) Head unit

As shown in Fig. 3, the head unit 30 includes a helmet-type head unit body 31, and a see-through head-mounted display (hereinafter referred to as "see-through display") 32 mounted to a front surface of the head unit body 31. The see-through type includes "video see through" that achieves virtual see-through through an image reflecting a camera, "optical see through" that uses an optical member such as a half mirror or uses a transparent display and so on, and may be any of them. In addition, a display type head-mounted display may not be used, but a projection type head-mounted display is used.

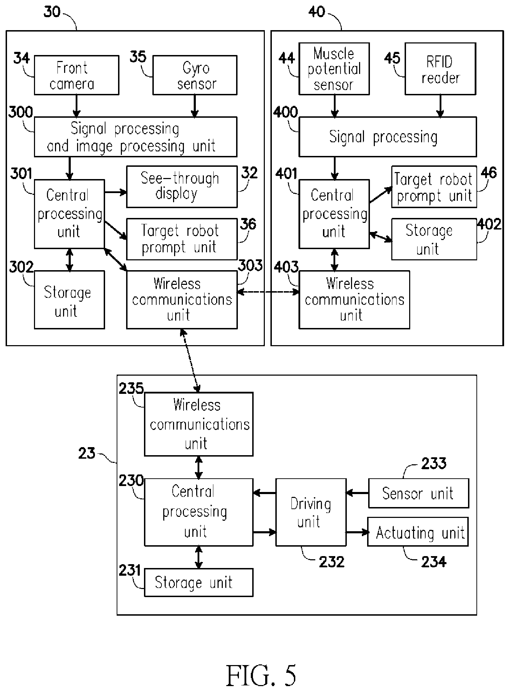

The head unit body 31 is provided with a power switch 33, a front camera 34, and a gyro sensor 35. Moreover, a computer (control unit) with functions of a signal processing/image processing unit, a central processing unit, a storage unit, a wireless communications unit and so on is disposed in the head unit body 31, which will be described in detail in Fig. 5.

The power switch 33 is a switch for switching power ON/OFF of the head unit 30, and is configured in a position that may not be incorrectly touched by the worker in work such as an edge of a helmet. The front camera 34 is a camera that shoots an image in a gazing direction (the direction that the head faces directly) of the worker. When it is of a video see through type, the image acquired from the front camera 34 is displayed on the see-through display 32. The gyro sensor 35 is an angular velocity sensor for sensing a head movement of the worker and is mounted to the top of the head. In addition, a three-axis acceleration sensor may also be disposed in place of the gyro sensor 35 or disposed together with the gyro sensor 35. The acceleration sensor may also be used for sensing the head movement.

The see-through display 32 is provided with a target robot prompt unit 36 along an edge thereof. The target robot prompt unit 36 is a luminous body lit on with an identification color of a robot as a cooperative object (target robot), including, for example, an LED. In addition, in the embodiment, the see-through display 32 and the target robot prompt unit 36 are composed of different devices, but the see-through display 32 may also have the function of the target robot prompt unit by making a part thereof display an image in a color the same as the identification color.

### (2) Arm unit

As shown in Fig. 4, the arm unit 40 includes an arm unit body 41 mounted to the front arm of the worker and a fixing band 42 for fixing the arm unit body 41. Fig. 4 indicates a condition that the arm unit 40 is mounted to the left arm, but may also be mounted to the right arm.

The arm unit body 41 is provided with a power switch 43, a muscle potential sensor 44, a Radio Frequency Identification (RFID) reader 45 and a target robot prompt unit 46. Moreover, a computer (control unit) with functions of a signal processing unit, a central processing unit, a storage unit, a wireless communications unit and so on is disposed in the arm unit body 41, which will be described in detail in Fig. 5.

The power switch 43 is a switch for switching power ON/OFF of the arm unit 40, and configured in a position that may not be incorrectly touched by the worker in work such as on an inner side surface of the arm unit body 41. The muscle potential sensor 44 is a sensor that senses a muscle potential of the front arm of the worker, and mounted to a part of the arm unit body 41 in contact with a skin surface of the front arm. The RFID reader 45 is a sensor for reading a robot ID from the IC tag 25 (refer to Fig. 2) mounted to the working platform 20. The target robot prompt unit 46 is a luminous body lit on with an identification color of a robot as a cooperative object (target robot), including, for example, an LED. The target robot prompt unit 46 is controlled to be linked with the target robot prompt unit 36 of the head unit 30 (emit light in the same color).

The fixing band 42 includes a front arm band 42a wound around the front arm, an upper arm band 42a wound around the upper arm, and a connecting band 42c that can elastically connect the front arm band 42a with the upper arm band 42a. The structure of the fixing band 42 has the following function: fixing the arm unit body 41 without being detached from the front arm, mounting the arm unit body 41 to the front arm towards a correct direction, and only mounting one arm unit 40. Use of the fixing band 42 causes the arm unit 40 not to be incorrectly mounted physically. Thus, safety of the cooperative work with the robot in the system can be improved.

### (Functional composition)

Fig. 5 is a block diagram of functional composition of the robot control system of the embodiment. In Fig. 5, like symbols are marked for parts with the same composition shown in Fig. 2 to Fig. 4. In addition, the robot control system, as shown in Fig. 1, includes multiple robots, but for ease of description, only the composition of one robot 23 is indicated in Fig. 5.

The robot 23 includes a central processing unit 230, a storage unit 231, a driving unit 232, a sensor unit 233, an actuating unit 234 and a wireless communications unit 235. The central processing unit 230 is a processor that performs various operational processing or makes control over blocks of the robot 23 by reading and executing a program stored in the storage unit 231. The storage unit 231 includes a non-volatile memory that stores a program such as firmware or various set parameters, and a volatile memory that can be used as a working memory of the central processing unit 230.

The driving unit 232 is a control circuit including a circuit that inputs a sensor signal from the sensor unit 233 and a circuit that outputs a driving signal to the actuating unit 234. The sensor unit 233 is an input device for acquiring information used in the control over the robot 23. The actuating unit 234 is an output device that drives the arm, the hand, the tool and the like of the robot 23. The sensor includes various types of sensors such as a light sensor, a sound sensor, a vibration sensor, a temperature sensor, a force sensor (tactile sensor), and a distance sensor, and a desired number and type of the sensor can be set according to the composition or operation content of the robot 23. Moreover, the actuator also includes various types such as a servo motor, a linear actuator, and a solenoid, and a desired number and type of the actuator can be set according to the composition or operation content of the robot 23. The wireless communications unit 235 is a module for conducting wireless communication with the head unit 30 of the worker terminal.

The head unit 30 of the worker terminal includes a see-through display 32, a front camera 34, a gyro sensor 35, a signal processing/image processing unit 300, a central processing unit 301, a storage unit 302, a wireless communications unit 303 and a target robot prompt unit 36. The signal processing/image processing unit 300 is a circuit that inputs a sensor signal of the gyro sensor 35 and an image signal of the front camera 34 and performs amplification, filtering, analog digital (AD) conversion and the like. The central processing unit 301 is a processor that performs various operational processing or makes control over the see-through display 32, the wireless communications unit 303, the target robot 36 and the like by reading and executing a program stored in the storage unit 302. The storage unit 302 includes a non-volatile memory that stores a program such as firmware, set parameters such as threshold values set by the worker and reference image data for gesture identification, and a volatile memory that can be used as a working memory of the central processing unit 301. The wireless communications unit 303 is a module for conducting wireless communication with the arm unit 40 and the robot 23.

The arm unit 40 of the worker terminal includes a muscle potential sensor 44, an RFID reader 45, a signal processing unit 400, a central processing unit 401, a storage unit 402, a wireless communications unit 403 and a target robot 46. The signal processing unit 400 is a circuit that inputs a sensor signal of the muscle potential sensor 44 and performs amplification, filtering, AD conversion and the like. The central processing unit 401 is a processor that performs various operational processing or makes control over the wireless communications unit 403, the target robot prompt unit 46 and the like by reading and executing a program stored in the storage unit 402. The storage unit 402 includes a non-volatile memory that stores a program such as firmware or various set parameters, and a volatile memory that can be used as a working memory of the central processing unit 401. The wireless communications unit 403 is a module for conducting wireless communication with the head unit 30.

The wireless communication between the robot 23, the head unit 30 and the arm unit 40 may be conducted in any manner. For example, Institute of Electrical and Electronics Engineers (IEEE)802.11, IEEE802.15, infrared communication and the like are suitable.

### (Identification and control over target robots)

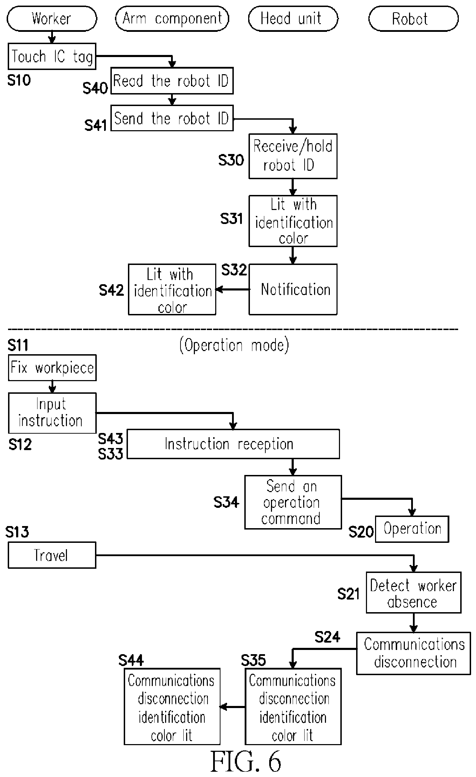

Next, a flow of identifying and controlling target robots in the robot control system in the embodiment is described with reference to the sequence diagram of Fig. 6. Description is given below by taking a screwing operation on the third working platform on the cell production line of Fig. 1 as an example. However, reference can be made to the symbols used in Fig. 2 to Fig. 5 for the symbols of various constituents.

Firstly, the worker moves to the working platform 20 that performs a screwing operation, and uses the arm unit 40 to touch the IC tag 25 of the working platform 20 (S10). Then, the RFID reader 45 of the arm unit 40 reads the robot ID of the robot 23 recorded in the IC tag 25 (S40). The central processing unit 401 of the arm unit 40 sends the read robot ID to the head unit 30 through the wireless communications unit 403 (S41). The central processing unit 301 of the head unit 30 stores the robot ID received from the arm unit 40 in the storage unit 302 (S30).

Then, the central processing unit 301 of the head unit 30 reads out the identification color corresponding to the robot ID from the storage unit 302, making the target robot prompt unit 36 become an ON status after lighting on and off several times according to the identification color (S31). Moreover, the central processing unit 301 notifies the arm unit 40 about the robot ID or the identification color through the wireless communications unit 303 (S32). Then, the central processing unit 401 of the arm unit 40 makes the target robot prompt unit 46 disposed in the arm unit 40 become an ON status after lighting on and off several times according to the identification color (S32). Afterwards, the worker terminal becomes an operation mode, and becomes a status that an operation instruction of the worker can be received.

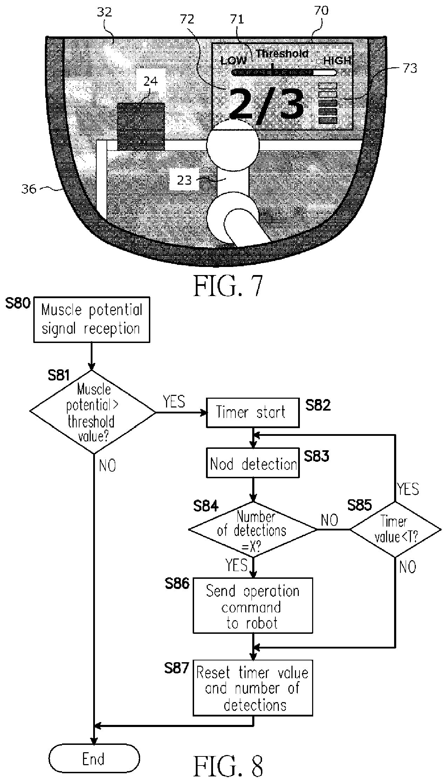

Fig. 7 is an example of the field of view of the worker in an operation mode, and indicates the field of view of the worker who sees the identification color display unit 24 of the robot 23 across the see-through display 32. For example, when the identification color of the robot 23 is blue, the see-through display 32 is lit on with blue around (the target robot prompt unit 36), and a color the same as that of the identification color display unit 24 of the robot 23 can be seen. Moreover, although not shown, the target robot prompt unit 46 of the arm unit 40 is also lit on with blue. Suppose that the target robot identified by the worker terminal side is different from the robot that the worker implies, the ON color at the worker terminal side is inconsistent with the identification color unit at the robot side in the field of view, therefore, according to the composition of the embodiment, whether identification of the target robot is correctly performed can be directly and immediately confirmed. Moreover, a third party other than the worker (e.g., other workers in the same cell, the factory manager, etc.) can also see the ON color at the worker terminal side and the identification color at the robot side, and thus safety of the cooperative work and normal operations of the system can be managed and monitored objectively.

Back to Fig. 6, processing in the operation mode is described.

The worker configures a workpiece in a specified position of the working platform 20, and presses parts or cables as screwing objects with hands and fixes them (S11). Then, if the worker inputs a specified operation instruction (S12), the worker terminal (the head unit 30 and the arm unit 40) receives the operation instruction (S43, S33), and the central processing unit 301 of the head unit 30 sends an operation command to the robot 23 (S34). At this point, the command message records the robot ID stored in S30. The operation command may be received by multiple robots in the cell, but the command message specifies a robot ID, and thus each robot can judge whether it is an operation command for itself, and refuses the operation command not for itself.

In the example, after receiving the operation command, the robot 23 makes an electric driver on a front end of the arm vertically drop, to screw the parts or cables pressed by the worker (S20). When there are multiple screwing positions, the processing described in S11-S20 is repeated. According to the above contents, cooperative work between the worker and the robot 23 can be performed smoothly.

Before and after the worker accomplishes the operation and leaves the working platform 20 (S13), the human-sensing sensor 26 senses the absence of the worker (there is no worker within an available range of the robot 23) (S21). Then, the central processing unit 230 of the robot 23 notifies the worker terminal to cut off communication (S22). After receiving the notification, the worker terminal cuts off the communication with the robot 23, making the target robot prompt units 36 and 46 lit off (S35, S44).

### (Input of operation instructions)

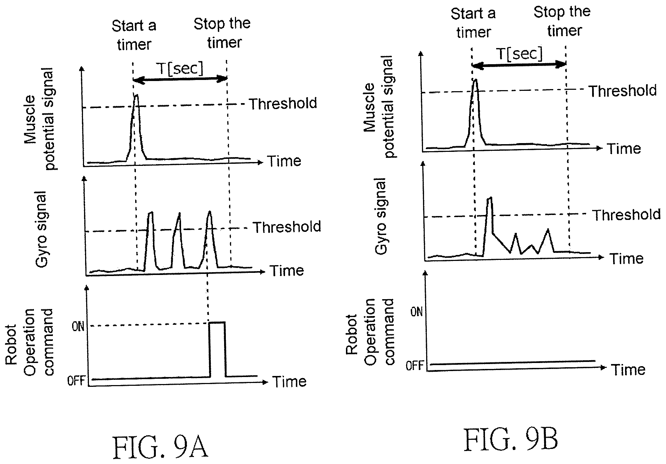

Next, a specific example of operation instruction input and processing reception in S12, S33 and S44 of Fig. 6 is described with Fig. 7 to Fig. 9B. Fig. 8 is a flowchart of operation instruction input and processing reception, and Fig. 9A and Fig. 9B are diagrams of an example of output signals of a muscle potential sensor and a gyro sensor.

The worker terminal of the embodiment inputs an operation instruction according to a combination of change in the muscle potential and the head movement. Specifically, when two conditions are satisfied, i.e., the muscle potential exceeds a threshold value (a first condition) and a nodding operation (an operation of shaking the head longitudinally) is performed within a specified limit item T greater than or equal to X times (a second condition), it is judged that the worker has input an operation instruction to the robot. The values of the threshold value, the limit time T and X can be set by the worker arbitrarily (the set mode will be stated hereinafter). Description is given below by supposing that the limit time T=5 s and X= 3 times.

Fig. 8 is a flow of judgment performed by the central processing unit 301 of the head unit 30 of the worker terminal. Muscle potential signals sensed by the muscle potential sensor 44 of the arm unit 40 are sequentially sent to the central processing unit 301 of the head unit 30. After receiving the muscle potential signals, the central processing unit 301 judges whether the muscle potential exceeds a threshold value (S81). When the muscle potential is less than or equal to the threshold value (S81; NO), the central processing unit 301 is in a standby mode until the next muscle potential signal is received.

When the muscle potential does not exceed the threshold value (S81; YES), the central processing unit 301 starts a timer to count an elapsed time (S82).

The central processing unit 301 monitors gyro signals (angular velocity) output from the gyro sensor 35, and when detecting a gyro signal exceeding a certain threshold value, judges that a "nodding operation" is performed, and incrementally counts the number of nodding detection (S83). When the number of nodding detection does not reach X (S84; NO), and a timer value is smaller than the limit time T (S85; YES), gyro signals are monitored continuously. When the number of nodding detection reaches X times (3 times) (S84; YES), the central processing unit 301 judges that the worker has input an operation instruction, and sends an operation command to the robot 23 (S86) (refer to D33 in Fig. 6).

Then, the central processing unit 301 resets the timer value and the number of nodding detection (S87), and ends processing. In addition, when the number of nodding detection does not reach X times, and the timer value is larger than the limit time T (S85; NO), the timer value and the number of nodding detection are also reset (S87), and processing is ended.

Fig. 9A indicates an example that the worker inputs an operation instruction and sends an operation command to the robot. That is to say, within T s after the muscle potential signal exceeds the threshold value, a gyro signal exceeding the threshold value is sensed 3 times, and at the timing of sensing the gyro signal for the third time, an operation command is sent to the robot. On the other hand, Fig. 9B indicates an example that an instruction is identified not as an operation instruction. That is to say, the timer operates because it senses a muscle potential signal exceeding the threshold value, but an operation command is not input to the robot because a gyro signal is sensed only once within the limit time T. For example, in the case that a force is accidentally applied to the arm in work, the muscle potential sometimes may rise inadvertently (also referred to as misoperation), but as it is not in line with the head movement as the second condition (the number of nodding), the misoperation is refused, to prevent sending of an operation command to the robot and malfunction of the robot.

In the embodiment, as shown in Fig. 7, a monitor screen (prompt unit) 70 for assisting the input operation of the worker is displayed on a part of the see-through display 32. The monitor screen 70 includes: a muscle monitor 71 that real-time notifies a measurement value of the muscle potential sensor 44 (a muscle potential value); a nodding number monitor 72 that prompts values of the number of nodding detection and the nodding number X required for the operation instruction; and a limit time monitor 73 that prompts countdown (remaining time) of a limit time for inputting the nodding operation. A semitransparent graphic image is used on the monitor screen 70, to overlap-display background images.

In the example of Fig. 7, in the muscle monitor 71, the muscle potential value is light-column displayed, when the muscle potential exceeds the threshold value, the light column becomes red, and the light column is blue when the muscle potential is less than or equal to the threshold value. With such display, the worker performs an input operation while confirming how much force is applied to make the muscle potential exceed the threshold value. Moreover, the limit time monitor 73 represents the remaining time with a progress bar. With such display, the worker can easily confirm that input (the first condition) of the muscle potential has been successful and when the nodding operation should be input. Moreover, in the nodding number monitor 72, the nodding number X (which is "3" in the example of Fig. 7) required is displayed on the right, and the current number of nodding detection (which is "2" in the example of Fig. 7) is displayed on the left. By confirming the value, the worker can easily confirm whether his/her nodding operation has been sensed actually and then how many times the nodding operation can be performed and so on.

In addition, the worker can move the monitor screen 70 to any position on the see-through monitor 32 (in default, the monitor screen is configured in the center of the display). Moreover, the display size or transparency of the monitor screen 70 may change freely. Therefore, the worker can change the display pattern of the monitor screen 70 without affecting the operation.

### (Set mode)

Next, the set mode of the worker terminal is described. Switching between the operation mode and the set mode is performed by using a gesture input of the front camera 34, and a mode switching switch may also be provided for the head unit 30 or the arm unit 40. In the set mode, the set parameter (e.g., the threshold value of the muscle potential signal, the nodding detection threshold value, the limit time T, the number of nodding number X, etc.) stored in the storage unit of the head unit 30 or the arm unit 40 can be changed.

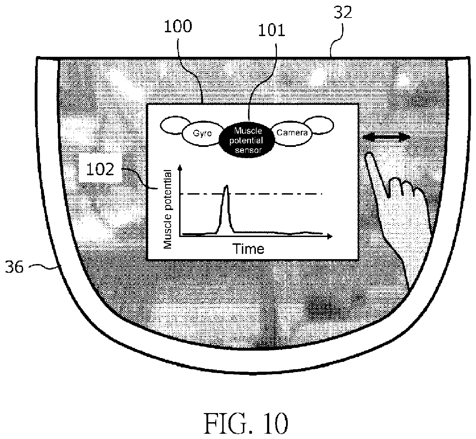

Fig. 10 is an example of a set screen 100 displayed on the see-through display 32 in the set mode. An icon group 101 indicating set objects such as a gyro sensor, a muscle potential sensor, a front camera and the like is displayed on an upper unit of the set screen 100. The icon group 101 can roll horizontally by using a hand gesture that moves the hand or finger left and right. A setting GUI (Graphical User Interface) 102 corresponding to an icon in the center of the icon group 101 is displayed on the set screen 100. Fig. 10 is an example of the setting GUI102 used by the muscle potential sensor.

A curve graph of a measurement value of the muscle potential sensor 44 (the muscle potential value) is real-time displayed in the setting GUI102 used by the muscle potential sensor. A current threshold value is displayed on the curve graph with a point connecting line. A threshold value changing method includes two types, i.e., "auto set" and "manual set". After "auto set" is selected by using a hand gesture, guide language of "please apply a force to the front arm" appears on the set screen 100, and the worker inputs the muscle potential. After the input is performed multiple times (e.g., 5 to 10 times) according to the guide language, their mean and dispersion are calculated, and an appropriate threshold value is calculated according to the resultant value. On the other hand, when "manual set" is selected, the threshold value on the curve graph rises and falls by using hand gestures.

Although not shown, the nodding detection threshold value may also be set on the same setting GUI. Moreover, the limit time T or the nodding number X may be input by using a hand gesture or a nodding operation. The changed set parameter is stored in the storage unit of the head unit 30 or the arm unit 40 in a covering way.

### (Advantages of the embodiment)

According to the composition of the embodiment, the worker has to intentionally input two types of entirely different operations, i.e., "change in muscle potential" and "head movement", and thus the robot's malfunction caused by an accidental activity or misoperation can be avoided as much as possible. Moreover, as long as they are the muscle potential (apply a force to the arm) and the head movement (nodding), they can be input as a natural activity flow of the worker, even if the worker holds things with two hands, and thus operation efficiency may not be affected.

Moreover, in the embodiment, a monitor screen 70 is displayed on the see-through display 32, the change in the muscle potential, the nodding detection number, the limit time and so on can be seen, and thus the worker can self-detect whether the input operation is proper, which helps to make the input operation feasible, improve the input skill, suppress the incorrect input and so on. Moreover, owing to the use of the see-through display 32, the worker can make confirmation on the monitor screen 70 when his/her sight does not leave the workpiece or the robot. So, input operations can be performed more safely and feasibly.

As the body size or body composition has individual differences, the value of the muscle potential or the movement mode of the body of each worker varies greatly. Therefore, the same condition (threshold value or the like) is not employed for all the workers, but input operations can be performed more safely and feasibly by setting a set mode to adjust conditions according to the workers' body features or activity characteristics.

### [Other embodiments]

The embodiment indicates a specific example of the invention, not aimed at limiting the scope of the invention to the specific examples.

For example, the muscle potential sensor 44 may also be mounted to a place other than the front arm. Moreover, in the embodiment, after the muscle potential exceeds a threshold value, a nodding operation is required to be performed multiple times within a specified time, but this is only an example, and any operation can be used as long as it is an operation instruction defined by a combination of the change in the muscle potential and the head movement. Also, in the embodiment, a worker terminal including a head-mounted head unit 30 and an arm unit 40 is illustrated, but the composition is also only an example, and the worker terminal can be any composition as long as it includes a sensor that senses the muscle potential and a sensor that senses the head movement. For example, it is not limited to a wearable form, but may also be a worker terminal available for the worker to hold (handhold), and preferably, a portable computer such as a smart phone or a tablet terminal is used as the worker terminal.

### [Description of symbols]

10a, 10b: worker
11-16, 20: working platform
11a, 12a, 13a, 15a, 16a, 23: robot
24: identification color display unit
25: IC tag
26: human sensing sensor
30: head assembly
32: see-through display
34: front camera
35: gyro sensor
36: target robot prompt unit
40: arm unit
44: muscle potential sensor
45: RFID reader
46: target robot prompt unit

## Claims

1. A worker terminal, sending an operation command to robots (11a, 12a, 13a, 15a, 16a, 23) used in work, wherein the worker terminal comprises:
a first sensor (44) that detects a muscle potential of a worker (10a, 10b);
a second sensor (35) that detects a head movement of the worker (10a, 10b);
a processing unit (230, 301, 401) that determines whether or not an operation instruction, defined by a combination of the head movement and change in the muscle potential, has been input by the worker (10a, 10b), on the basis of the detection results of the first sensor (44) and the second sensor (35); and
a communications unit (235, 303, 403) that sends the operation command to the robots (11a, 12a, 13a, 15a, 16a, 23) if a determination has been made that the operation instruction has been input by the worker (10a, 10b); the worker terminal being **characterized in** further comprising:
a prompt unit (36, 46) that prompts the change in the muscle potential sensed by the first sensor (44) and the head movement sensed by the second sensor (35) to the worker (10a, 10b),
wherein when the change in the muscle potential satisfies a first condition and the head movement satisfies a second condition, the processing unit (230, 301, 401) judges that the operation instruction has been input, and the prompt unit (36, 46) prompts the first condition and the second condition to the worker (10a, 10b),
wherein within a specified limit time after the muscle potential satisfies the first condition, the processing unit (230, 301, 401) judges that the operation instruction has been input when the head movement satisfies the second condition, and when the muscle potential satisfies the first condition, the prompt unit (36, 46) further prompts a countdown of the limit time for inputting the head movement.

2. The worker terminal according to claim 1, further comprising a setting change unit (34) that changes the first condition and/or the second condition by the worker (10a, 10b).

3. The worker terminal according to any of claims 1 to 2, wherein the worker terminal comprises a see-through head-mounted display (32), and
the prompt unit (36, 46) is a graphic image displayed on the head-mounted display (32).

## Patentansprüche

1. Arbeiterendgerät, das einen Betriebsbefehl an Roboter (11a, 12a, 13a, 15a, 16a, 23) sendet, die bei der Arbeit verwendet werden, wobei das Arbeiterendgerät umfasst:
einen ersten Sensor (44), der ein Muskelpotenzial eines Arbeiters (10a, 10b) erfasst;
einen zweiten Sensor (35), der eine Kopfbewegung des Arbeiters (10a, 10b) erfasst;
eine Verarbeitungseinheit (230, 301, 401), die auf der Basis der Erfassungsergebnisse des ersten Sensors (44) und des zweiten Sensors (35) bestimmt, ob eine Betriebsanweisung, die durch eine Kombination aus der Kopfbewegung und Änderung des Muskelpotentials definiert ist, von dem Arbeiter (10a, 10b) eingegeben wurde oder nicht; und
eine Kommunikationseinheit (235, 303, 403), die den Betriebsbefehl an die Roboter (11a, 12a, 13a, 15a, 16a, 23) sendet, wenn eine Feststellung gemacht wurde, dass die Betriebsanweisung durch den Arbeiter (10a, 10b) eingegeben wurde; wobei das Arbeiterendgerät **dadurch gekennzeichnet ist, dass** es ferner umfasst:
eine Meldeeinheit (36, 46), die die Änderung in dem Muskelpotential, abgetastet von dem ersten Sensor (44) und die Kopfbewegung, abgetastet von dem zweiten Sensor (35) an den Arbeiter (10a, 10b) meldet,
wobei, wenn die Änderung in dem Muskelpotential eine erste Bedingung erfüllt und die Kopfbewegung eine zweite Bedingung erfüllt, die Verarbeitungseinheit (230, 301, 401) beurteilt, dass der Betriebsbefehl eingegeben wurde, und die Meldeeinheit (36, 46) dem Arbeiter (10a, 10b) die erste Bedingung und die zweite Bedingung meldet,
wobei innerhalb einer festgelegten Grenzzeit, nachdem das Muskelpotential die erste Bedingung erfüllt, die Verarbeitungseinheit (230, 301, 401) beurteilt, dass der Betriebsbefehl eingegeben wurde, wenn die Kopfbewegung die zweite Bedingung erfüllt, und wenn das Muskelpotential die erste Bedingung erfüllt, die Meldeeinheit (36, 46) ferner einen Countdown der Grenzzeit für die Eingabe der Kopfbewegung meldet.

2. Arbeiterendgerät gemäß Anspruch 1, ferner umfassend eine Einstellungsänderungseinheit (34), die die erste Bedingung und/oder die zweite Bedingung durch den Arbeiter (10a, 10b) ändert.

3. Arbeiterendgerät gemäß irgendeinem der Ansprüche 1 bis 2, wobei das Arbeiterendgerät eine durchsichtige, am Kopf montierte Anzeige (32) umfasst, und
die Meldeeinheit (36, 46) ein grafisches Bild ist, das auf der an dem Kopf montierten Anzeige (32) angezeigt wird.

## Revendications

1. Terminal opérateur, envoyant une commande d'opération à des robots (11a, 12a, 13a, 15a, 16a, 23) utilisés pour travailler, dans lequel le terminal opérateur comprend :
un premier capteur (44) qui détecte un potentiel musculaire d'un opérateur (10a, 10b) ;
un deuxième capteur (35) qui détecte un mouvement de tête de l'opérateur (10a, 10b) ;
une unité de traitement (230, 301, 401) qui détermine si une instruction d'opération, définie par une combinaison du mouvement de tête et d'un changement du potentiel musculaire, a été ou non entrée par l'opérateur (10a, 10b), sur la base des résultats de détection du premier capteur (44) et du deuxième capteur (35) ; et
une unité de communication (235, 303, 403) qui envoie la commande d'opération aux robots (11a, 12a, 13a, 15a, 16a, 23) s'il a été déterminé que l'instruction d'opération a été entrée par l'opérateur (10a, 10b) ; le terminal opérateur étant **caractérisé en ce qu'**il comprend en outre :
une unité de présentation (36, 46) qui présente le changement du potentiel musculaire détecté par le premier capteur (44) et le mouvement de tête détecté par le deuxième capteur (35) à l'opérateur (10a, 10b),
dans lequel, lorsque le changement du potentiel musculaire satisfait une première condition et le mouvement de tête satisfait une deuxième condition, l'unité de traitement (230, 301, 401) juge que l'instruction d'opération a été entrée, et l'unité de présentation (36, 46) présente la première condition et la deuxième condition à l'opérateur (10a, 10b), dans lequel
au cours d'un temps limite spécifié après que le potentiel musculaire satisfait la première condition, l'unité de traitement (230, 301, 401) juge que l'instruction d'opération a été entrée lorsque le mouvement de tête satisfait la deuxième condition, et, lorsque le potentiel musculaire satisfait la première condition, l'unité de présentation (36, 46) présente en outre un compte à rebours du temps limite pour entrer le mouvement de tête.

2. Terminal opérateur selon la revendication 1, comprenant en outre une unité de changement de réglage (34) qui change la première condition et/ou la deuxième condition par l'opérateur (10a, 10b).

3. Terminal opérateur selon la revendication 1 ou 2, dans lequel le terminal opérateur comprend un visiocasque transparent (32), et
l'unité de présentation (36, 46) est une image graphique affichée sur le visiocasque (32).
